# EUROPEAN PATENT SPECIFICATION

(11) **EP 2 744 349 B1**
(45) Date of publication and mention of the grant of the patent: **20.04.2016**
(21) Application number: 12751310.9
(22) Date of filing: 17.08.2012
(51) Int. Cl.: A21D 2/36, A23L 5/00, A23L 5/10, A23L 7/143

(54) **PROCESS FOR PREPARATION OF A DRY INSTANT PORRIDGE**
VERFAHREN ZUR HERSTELLUNG EINES TROCKENEN INSTANTBREIS
PROCÉDÉ POUR LA PRÉPARATION D'UNE BOUILLIE INSTANTANÉE SÈCHE

(30) Priority: 19.08.2011 US 201161525258 P; 11.11.2011 EP 11188785
(43) Date of publication of application: 25.06.2014
(73) Proprietor: DSM IP Assets B.V., 6411 TE Heerlen (NL)
(72) Inventor: STREEKSTRA, Hugo, NL-2600 MA Delft (NL); YANG, Zhi, NL-6706HC Wageningen (NL)
(74) Representative: Rabanus, Birgit
(86) International application number: PCT/EP2012/066066
(87) International publication number: WO 2013/026785

(56) References cited:
- EP-A1- 0 682 876
- GB-A- 1 313 417
- US-A1- 2004 076 718
- JANSEN G R ET AL: "The calorie densitites of gruels made from extruded corn-soy blends", FOOD AND NUTRITION BULLETIN, UNITED NATIONS UNIVERSITY PRESS, TOKYO, JP, vol. 3, no. 1, 1 January 1981 (1981-01-01) , pages 39-44, XP009155714, ISSN: 0379-5721
- DATABASE GNPD [Online] Mintel; October 2009 (2009-10), Anonymous: "Plum Porridge", XP002667988, retrieved from www.gnpd.com Database accession no. 1193362
- BERRIOS J D J ET AL: "Carbohydrate composition of raw and extruded pulse flours", FOOD RESEARCH INTERNATIONAL, ELSEVIER APPLIED SCIENCE, BARKING, GB, vol. 43, no. 2, 1 March 2010 (2010-03-01), pages 531-536, XP026881640, ISSN: 0963-9969, DOI: 10.1016/J.FOODRES.2009.09.035 [retrieved on 2009-10-23]

## Description

### Technical field

The present invention relates to a process for the preparation of a dry instant porridge comprising the enzymatic hydrolysis of a milled carbohydrate-rich food blend by at least one amylase enzyme in an extruder operated at moderate temperature and at low moisture content. The present invention also refers to a dry instant porridge or a fortified dry instant porridge obtainable by the above mentioned process.

### Background of the invention

Between six and twelve months of age, the average energy requirements of children are 98 kcal/kg per day, and then rises to 102 kcal/kg per day during the second and third year of life (FAO/WHO/UNU 1985). The AAP (American Academy of Pediatrics) recommends that children age 1 to 3 years get about 40 calories per inch of height a day, which corresponds in general with the average statement given above. In addition, median intake of water/liquids from drinks is about 820 ml/day (Forschungsinstitut für Kinderernährung, 2005).

The food basket of non-governmental organizations NGOs comprise flour, pulses, oil, sugar and similar, and is complemented by fortified food blends, such as corn soya blend or wheat soya blend. These blends are fortified with vitamins and minerals to prevent or treat hidden hunger.

Fortified food blends are blends of milled carbohydrate-rich crops - such as corn, wheat, sorghum, millet and the like, and milled protein-rich legumes - such as soy, chick peas, lentils beans and the like. These blends are fortified with essential vitamins and minerals. Today, corn soya blend (CSB) is the most important complementary food product in food aid provided to populations in need of in developing world. It is provided to children of 6 months of age and up. Satisfying the nutritional needs of infants during the first 1000 days of life are considered to be crucial in terms of allowing a child to realize his/her genetic potential for future lifelong professional performance. If a child is malnourished during this period, his/her brain and cognitive development will be suboptimal, thus limiting his/her future professional perspective.

Today, corn soya blend (CSB) is the most important food blend used in food aid. It is provided as porridge to humans in need from the age of 6 months and up (toddlers) in rations of currently up to 200 g/d. However, current CSB is limited in its nutritional benefit for several reasons:
Firstly, the current CSB gives rise to a porridge with a high viscosity, thus limiting the weight percentage of CSB which can be used to prepare a porridge, especially a porridge suitable for swallowing by small children, but also HIV patients and other people having difficulty to swallow a high viscosity meal.

Thus, the current porridge viscosity limits the achievable energy density of the porridge.

The current energy density means that a toddler has to eat 1.8 L porridge per day to consume its energy needs of approximately 1000 kcal (realistic: 5x 200 mL/d). Children currently are hardly able to eat an entire portion (290 mL), thus the remainder of the portion is being kept. As a result, children do not get enough calories, and thus do not grow optimally. Moreover, keeping the prepared porridge at ambient temperature in tropical countries risks microbial growth in porridge, leading to diarrhea in the consumers including children. Diarrhea in turn leads to disturbed food intake and digestion, thus further limiting energy intake and child development.

Secondly, the slightly bitter and otherwise relatively neutral taste limits the acceptability of the porridge by consumers including children, hence also has a bearing for the energy intake by toddlers.

Thirdly, the process for the preparation of a porridge from a milled carbohydrate-rich crop comprises the essential step of heating the porridge to boiling temperature for at least 10 minutes, in order to get to an acceptable viscosity when prepared at the standard 13.7 wt.% in water.

There are few other very successful tasty food products with high energy density to treat malnutrition, like peanut-based ready to use therapeutic food. However, available funding is not sufficient to provide such products to all children in need. Also, a more balanced nutrient profile would be desirable in terms of calories provided from fat versus from carbohydrates.

Hence for fighting macronutrient malnutrition, there is still a need for a cost effective and tasty fortified food blend porridge with a high energy density and a low density.

JANSEN et al., Food & Nut. Bull. vol. 3, n° 1, 1 January 1981, p. 39 - 44 discloses a process for the preparation of gruels, comprising the steps of milling CSB, adding α-amylase, adding water, extruding and drying the resulting paste.

US 2004/076718 discloses the production of a fortified dry pet food, involving the addition of an aqueous solution of α-amylase to farinaceous and proteinaceous ingredients, vitamins and minerals, followed by extrusion and drying of the extrudate.

GB 1 313 417 discloses a process for making a a dry instant fortified product for the manufacture of human foods, the process comprising the preparation of a flour mix, the addition of a vitamin/salt containing additive, the addition of α-amylase in water, followed by the extrusion and the drying of the resulting paste.

The inventors of the present application now surprisingly found a very efficient and new process for the production of a dry instant porridge which can easily be produced at industrial scale from a carbohydrate-rich food blend, and solves all of the above mentioned problems. This process consists in an amylase digestion of a milled carbohydrate-rich food blend in an extruder at low temperature and at low moisture content. Therefore, significantly less enzyme is required to hydrolyse the starch when compared to conventional high moisture reaction. Moreover, this process allows cheap production of high density and high quality instant porridge not requiring an extensive boiling step anymore before consumption. The high density of the resulting porridge is achieved by a significant reduction of the viscosity resulting from the efficient enzymatic treatment, while quality (glucose content) and consistency is also improved. Moreover, the resulting instant dried porridge is free of active enzyme, and therefore compatible with regulatory constraints.

Moreover, increasing the solid content in an enzymatic hydrolysis system is an advantage for the industry, since it yields a higher volumetric productivity, higher enzyme stability, and lower enzyme consumption by saving on the downstream cost of drying the final product.

Therefore, in a first embodiment, the invention relates to a process for the preparation of a dry instant porridge containing hydrolysed starch for human consumption comprising the steps of:
a) feeding an extruder operated at a temperature comprised between 60 and 80°C with
   (i) a milled carbohydrate-rich food blend comprising at least 50 wt.-% carbohydrate based on the paste composition,
   (ii) at least one amylase, and
   (iii) an aqueous solution,
   wherein the resulting paste comprises less than 30 weight-% moisture, and wherein the at least one amylase comprise an alpha-amylase and a glucoamylase,
b) adjusting the residence time in the extruder to less than 30 minutes, and
c) drying the extruded product.

"Dry instant porridge" means a milled dried powder made of a carbohydrate-rich crop and a protein-rich legume. This dried powder can be further enriched with vitamins and minerals to meet specific supplementation levels. The term "instant" means that the porridge is simply prepared by mixing the recommended amount of milled carbohydrate-rich food blend with water and then heating to a temperature of at least 37°C, but does not necessarily require an extensive boiling of at least 10 minutes before reaching an acceptable viscosity/flowability allowing consumers to eat it.

"Food blends" are standards in the food basket of non-governmental organizations mainly consisting today of corn soya blend and wheat soya blend. The term "carbohydrate-rich food blend" means a blend of carbohydrate-rich crops comprising corn, wheat, sorghum, millet and the like, and legumes such as soy, chick peas, lentils, beans and the like.

Amylase according to the present invention includes alpha amylases, beta-amylases, pullulanases, and glucoamylases.

Alpha-amylases belong to the group of enzymes E.C. 3.2.1.1., and are characterized by the fact that they are endo-acting starch degrading enzymes and are therefore involved in rapid reduction of the average molecular weight of starch suspensions. Beta-amylases E.C. 3.2.1.2 are alpha-beta, exo-acting glycosidases that liberate maltose units from the non-reducing end of amylase chains. Glucoamylases belong to the group of enzymes E.C. 3.2.1.3., and are characterized by the fact that they are exo-acting starch degrading enzymes.

According to the present invention, the aqueous solution fed to the extruder may contain additional salts and have a pH comprised between 5 to 8.

In another embodiment, the process comprises a further step d) consisting in milling the dried extruded product to a powder using any milling technology known in the art, and, supplementing the resulting powder with a vitamin and mineral premix to generate a fortified dried instant porridge. The vitamin and mineral premix typically used for supplementation, and the amount of each vitamins and minerals are described below in the definitions.

In a preferred embodiment, the extruder used in the process of the present invention is a twinscrew extruder so as to improve the blending of the dry feed (milled carbohydrate-rich food blend) with the liquid feed (aqueous solution), and with the amylase. For the present invention, the amylase may either be introduced to the extruder via the dry feed, via the liquid feed, or via a combination of both depending on the enzyme product form available.

The mixing of the dry feed with the liquid feed in the extruder creates a paste. In a preferred embodiment, the paste comprises less than 25 weight-% moisture, more preferably, less than 20 weight-% moisture, even more preferably, less than 15 weight-% moisture, and still allowing an optimal activity of the at least one amylase. In the most preferred embodiment, the paste comprises 20 to 15 weight-% moisture.

In another preferred embodiment, the extruder is operated at a temperature comprised between between 65 and 75°C, most preferably, between 70 and 75°C. The residence time in the extruder at the above mentioned temperature is less than 30 minutes, preferably, less than 20 minutes, more preferably less than 15 minutes.

In another preferred embodiment, the milled carbohydrate-rich food blend comprising at least 50 wt.% carbohydrate comprises a cereal, a pseudo-cereal or a mixture thereof, and a protein rich legume flour. Cereals and pseudo-cereals may be selected from corn, wheat, rice, barley, sorghum, oats, rye, triticale, fonio, buckwheat, quinoa, millet, and legume flours may be selected from soy, chick peas, lentils, and beans. More preferably, the milled carbohydrate-rich food blend comprising at least 50 wt.% carbohydrate is corn soya blend or wheat soya blend.

The at least one amylase comprises an alpha-amylase and a glucoamylase. Preferred alpha-amylases according to the present invention are "Bacterial Amylase 51400", "Fungal Amylase 11500" which both can be purchased from DSM Food Specialties; Delft; NL, and BAN800 from Novozymes Corp. based on their ability to exert their enzymatic activity in high dry matter content, thereby, reducing viscosity of the resulting porridge.

Preferred glucoamylases are Glucoamylase 65000 which can be purchased from DSM Food Specialties; Delft; NL, and AMG800 from Novozymes Corp. based on their ability to exert their enzymatic activity in high dry matter content, thereby, reducing viscosity of the resulting porridge.

In another embodiment, the weight ratio of alpha-amylase/glucoamylase is comprised between 0.1 and 10. More preferably, the weight ratio is comprised between 0.5 and 5.

More accurately, the ratio of alpha-amylase/glucoamylase can also be defined by the ratio of the specific activity of each enzyme as defined by enzyme units.

A convenient unit to express the activity of alpha-amylases is the RAU. 1 RAU is defined as the quantity of enzyme that converts under standardized conditions (pH=6.6, 30°C) 1 mg soluble starch per minute, having an equal absorption to a reference colour at 620 nm after reaction with Iodine. Therefore, alpha-amylase activity will be defined throughout the invention as RAU units.

A convenient unit to express the activity of Glucoamylases is the AGU. 1 AGU is defined as the quantity of enzyme which produces 1 µmole of glucose per minute at pH 4.3 and at a temperature of 60°C from a soluble starch substrate. Therefore, glucoamylase activity will be defined throughout the invention as AGU units.

Therefore, in a preferred embodiment, the unit ratio of alpha-amylase/glucoamylase is comprised between 0.08 and 8. More preferably, the unit ratio is comprised between 0.4 and 4

In yet another embodiment, the dry weight ratio of milled carbohydrate-rich food blend/amylase is comprised between 0.05, and 0.00005, more preferably between 0.005 and 0.00005.

For the present invention, the at least one amylase may either be introduced to the extruder via the dry feed or via the liquid feed depending on the enzyme product form available. In a particular embodiment, the at least one amylase is a liquid form, and is added to the extruder, in an amount as described above, via the aqueous solution. In another particular embodiment, the at least one amylase is added as a powder via the milled carbohydrate-rich food blend.

In another preferred embodiment of the present invention, the last segment of the extruder is heated up to 95°C to inactivate the at least one amylase.

The process according to the present invention leads to an extruded product which can be dried using any drying technology known in the art. Most preferred drying technology is however drying using hot air.

In another embodiment, the dried extruded product produced by the process of the present invention is milled to a powder using any milling technology known in the art. The resulting milled powder preferably may be further supplemented with a vitamin and mineral premix to generate a fortified dried instant porridge. The vitamin and mineral premix typically used for supplementation, and the amount of each vitamins and minerals are described below.

### Definitions

Malnutrition is the condition that results from taking an unbalanced diet in which certain nutrients are lacking, in excess (too high an intake), or in the wrong proportions. A number of different nutrition disorders may arise, depending on which nutrients are under- or over-abundant in the diet. The World Health Organization cites malnutrition as the gravest single threat to the world's public health. Improving nutrition is widely regarded as the most effective form of aid. Emergency measures include providing deficient micronutrients through fortified sachet powders, such as peanut butter, or directly through supplements. The famine relief model increasingly used by aid groups calls for giving cash or cash vouchers to the hungry to pay local farmers instead of buying food from donor countries, often required by law, as it wastes money on transport costs. Long term measures include investing in modern agriculture in places that lack them, such as fertilizers and irrigation, which largely eradicated hunger in the developed world. However, World Bank strictures restrict government subsidies for farmers and the spread of fertilizer use is hampered by some environmental groups.

A nutrient is a chemical that an organism needs to live and grow or a substance used in an organism's metabolism which must be taken in from its environment. Nutrients are the substances that enrich the body. They are used to build and repair tissues, regulate body processes and converted to and used as energy. Organic nutrients include carbohydrates, fats, proteins (or their building blocks, amino acids), and vitamins. Inorganic chemical compounds such as dietary minerals, water, and oxygen may also be considered nutrients. A nutrient is said to be "essential" if it must be obtained from an external source, either because the organism cannot synthesize it or produces insufficient quantities.

Nutrients needed in very small amounts are micronutrients and those that are needed in larger quantities are called macronutrients. The effects of nutrients are dose-dependent and shortages are called deficiencies.

An inadequate amount of a nutrient is a deficiency. Deficiencies can be due to a number of causes including inadequacy in nutrient intake called dietary deficiency, or conditions that interfere with the utilization of a nutrient within an organism. Some of the conditions that can interfere with nutrient utilization include problems with nutrient absorption, substances that cause a greater than normal need for a nutrient, conditions that cause nutrient destruction, and conditions that cause greater nutrient excretion.

Hidden hunger is unlike the hunger that comes from a lack of food. It is a chronic lack of vitamins and minerals that often has no visible warning signs, so that people who suffer from it may not even be aware of it. Its consequences are nevertheless disastrous: hidden hunger can lead to mental impairment, poor health and productivity, or even death. One in three people in the world suffer from hidden hunger. Women and children from the lower income groups in developing countries are often the most affected.

The process according to the invention provides a dry extruded milled carbohydrate-rich food blend with hydrolysed starch wherein the extruded product is not milled.

A dry instant porridge is obtainable by the process according to the present invention. Said dry instant porridge can be further fortified by addition of a defined amount of a vitamin and mineral premix according to recommendations provided by health authorities, and as exemplified below.

Moreover, a ready to eat porridge can be prepared by adding 15 to 30 wt-% of dry instant porridge or fortified dry instant porridge prepared according to a process of the present invention to water, and heating the porridge to a temperature of at least 37°C. Preferably, the porridge is boiled for at least 5 minutes.

The energy density of this porridge is higher than 800 kcal/l, and the flowability at 45°C as measured in a bostwick test is greater than 10 cm/30". Preferred energy density is higher than 1000 kcal/l, most preferred higher than 1200 kcal/l, while the preferred flowability is greater than > 12 cm/30".

Flowability is a measure of the resistance of a fluid which is being deformed by either shear stress or tensile stress. In everyday terms, flowability is "thickness" or "internal friction". Thus, water is "thin", having a lower viscosity, while honey is "thick", having a higher viscosity. In other words, the less viscous the fluid is, the greater its ease of movement (fluidity).

Flowability of food stuff is typically measured at a given temperature by the Bostwick Consistometer known to the person skilled in the art (P. Perona, 2005, Applied Rheology 15: 218-229). The normal way to use the Consistometer is to measure the distance a sample flows in a given time interval.

A typical food blend composition (corn soya blend) as used in the present invention has the following composition:

| **N°** | **Ingredients** | **Percentage (*by weight*)** |
|---|---|---|
| 1 | Corn (maize white or yellow) | 80 |
| 2 | Whole soya beans | 20 |

A typical fortified food blend composition (corn soya blend; CSB Plus) according to the present invention has the following composition:

| **N°** | **Ingredients** | **Percentage (*by weight*)** |
|---|---|---|
| 1 | Corn (maize white or yellow) | 78.24 |
| 2 | Whole soya beans | 20 |
| 3 | Vitamin/Mineral premix | 0.20 |
| 4 | Ca(H₂PO₄)₂. H2O (mono calcium phosphate) | 0.80 |
| 5 | KCI (potassium chloride) | 0.76 |

A typical vitamin and mineral premix as used in the present invention has the following composition:

| | **Target** | **Chemical forms** |
|---|---|---|
| **Vitamin/Mineral *premix*** | | |
| Vitamin A | 1.664 IU | Dry vitamin A palmitate 250 n.s |
| Thiamine | 0.128 mg | Thiamine mononitrate |
| Riboflavin | 0.448 mg | Riboflavin |
| Niacin | 4.8 mg | Nicotinamide |
| Pantothenic acid | 6.7 mg | Calcium d-pantothenate |
| Vitamin B6 | 1.7 mg | Pyridoxine hydrochloride |
| Folate | 60 mcg | Folic acid |
| Vitamin B12 | 2 mcg | Vitamin B12 - 0.1% spray dried |
| Vitamin C | 100 mg | Ascorbic acid |
| Vitamin D | 4 mcg | Dry vitamin D3 100 CWS |
| Vitamin E | 8.3 mg | Vitamin E 50% CWS |
| Vitamin K | 100 mcg | vitamin K1 5% CWS |
| Iron (a) | 4 mg | Ferrous fumarate |
| Iron (b) | 2.5 mg | Iron-sodium EDTA |
| Zinc | 5 mg | Zinc oxide |
| Iodine | 40 mcg | Potassium iodate (KIO3) |
| Carrier | qs | Malto dextrin |

| **Other minerals** | | |
|---|---|---|
| Potassium | 400 mg | Potassium chloride (KCl) |
| Phosphorus | 200 mg | Mono calcium phosphate Ca(H₂PO₄)₂. H2O |
| + Calcium | 130 mg | |

Typical preparation of a porridge is as follows:
The corn soya blend (CSB) powder is mixed with water at room temperature. Recommended content is 13.8 wt-% CSB powder. The mixture is then heated to boiling temperature, and then boiled for 5 to 10 minutes before being consumed at temperatures between 35 to 45°C.

The invention is further illustrated by the following examples.

### Examples

### Example 1: Preparation and viscosity determination of CSB+ porridges

### a- Materials: CSB, CSB+, EBA, AMG800

Corn-soya blend (CSB) is a flour that can be used to prepare porridge, flabreads or pancakes. It is made from ground corn and soya beans. Depending on the process conditions, the corn starch may be gelatinized, partly gelatinized or not gelatinized. The CSB used in the following examples contains non-gelatinized starch. A typical composition for CSB is:

| **N°** | **Ingredient** | **Percentage (*by weight*)** |
|---|---|---|
| 1 | Corn (maize white or yellow) | 80 |
| 2 | Whole soya beans | 20 |

Corn-soya blend plus (CSB+) is a fortified product on the basis of CSB, by addition of minerals and vitamins. The CSB+ used in the following experiments had been prepared by wet extrusion, which causes most of the starch to be gelatinized. A typical composition for CSB+ is:

| **N°** | **Ingredient** | **Percentage (*by weight*)** |
|---|---|---|
| 1 | Corn (maize white or yellow) | 78.24 |
| 2 | Whole soya beans | 20 |
| 3 | Vitamin/Mineral premix | 0.20 |
| 4 | Ca(H₂PO₄)₂. H2O (mono calcium phosphate) | 0.80 |
| 5 | KCI (potassium chloride) | 0.76 |

EBA is an α-amylase obtainable from DSM Food Specialties (Delft, the Netherlands). The activity of the EBA preparation was 27,100 RAU/g. 1 RAU is defined as the quantity of enzyme that will convert 1 mg soluble starch per minute under standardized conditions (pH 6.6, 30 °C).

AMG800 is an amyloglucosidase, obtainable from Novozymes (Bagsvaerd, Denmark). The specific activity of AMG800 is 65,000 AGI/g. 1 AGI is defined as the quantity of enzyme that produces 1 µmol of glucose per minute from soluble starch under standardized conditions (pH 4.3, 60 °C).

### b- viscosity determination of CSB+ porridges

The CSB+ powder was mixed with demineralized water at room temperature (proportions specified below for each example). When appropriate, enzymes were also added to the cold mixture. A suitable portion of the cold porridge was introduced into a Rapid Visco Analyzer (Perten Instruments, Germany).

The porridge was heated in the RVA with a temperature and stirring profile intended to mimic a normal cooking process, as indicated in the following table:

**The program for one incubation (20 minutes cooking profile) and viscosity measurement in RVA.**

| Time [h:m:s] | Parameter | Value |
|---|---|---|
| 00:00:00 | Temp | 20 °C |
| 00:00:00 | Speed | 100 rpm |
| 00:02:00 | Temp | 20 °C |
| 00:22:00 | Temp | 96 °C |
| 00:27:00 | Temp | 96 °C |
| 00:37:00 | Temp | 45 °C |
| 01:07:00 | Temp | 45 °C |
| 01:07:10 | End | |

The viscosity was monitored continuously during the temperature profile.

The level of free glucose was also measured. The glucose content was measured by HPLC, using the Agilent 1200 series (Aminex HPX-87P column, 300*7.8mm, Agilent Technologies Inc., USA). The samples were first centrifuged at 20,000g using a Centrifuge 5417C (Eppendorf, USA) for 5 minutes and the supernatant fraction was collected. When appropriate, the supernatants were heated at 99°C for 10 minutes to inactivate the enzyme. The supernatant was then filtered using a 10 kDa membrane to remove large molecules. Finally, the filtrate was diluted to a glucose concentration below 1 mg/ml (estimated) and filled into the HPLC vessels for determination of the glucose level.

### Example 2: The effect of amylases on CSB+ porridge

In this example, the effect of amylases in CSB+ porridge was explored. The dosage of the enzymes was kept constant relative to the CSB+ input, while the CSB+ dry matter content was varied.

In the examples below, the enzyme dosage mg/g is defined as mg enzyme/g CSB(+) powder. Viscosity at consumption refers to the final viscosity measured at 45 °C after cooling down from 5 min cooking at 96 °C (Time point 01:07:00 (h:m:s) in the 20' cooking profile).

| CSB+ 0.6 mg/g EBA+12 mg/g AMG 20' profile | | |
|---|---|---|
| | CSB+ % | viscosity at consumption cP |
| Blank | 15 | 1000 |
| Blank | 35 | 40000 |
| EBA+AMG | 30 | 150 |
| | 35 | 700 |
| | 40 | 2000 |
| | 45 | 6000 |

It is clear that amylases effectively reduced the final viscosity of CSB+ porridge.

To further check the individual effect of α-amylase EBA on the viscosity of CSB+ porridge, the CSB+ content was fixed to 45% while varying the EBA dosage.

| CSB+ 45% 20' profile | | |
|---|---|---|
| | Enzyme mg/g | viscosity at consumption cP |
| Blank | | 1000 |
| EBA | 3 | 3500 |
| | 6 | 2000 |
| | 10 | 600 |

It is clear that the α-amylase EBA effectively reduced the final viscosity of the CSB+ porridge in a dosage-dependent manner.

### Example 3: Incubation of CSB+ with enzymes at high solid contents with the assistance of an extruder

As we intended to investigate the effect of enzyme in CSB at high solid content, the preparation was performed in either a lab scale extruder (Micro 15cc twin screw extruder, DSM Xplore, the Netherlands) or pilot scale extruder (co-rotating ZSK 18 MEGA lab twin screw extruder, Coperion, Stuttgart, Germany) which is able to handle such a high viscosity level.

When the lab scale extruder was used, the extruder was first heated up to 70 °C. EBA was mixed with demineralized water and added into the extruder using a dropper. The CSB+ powder was then fed into the extruder using a stainless hop. The extrusion time was 20 min with a rotation speed of 100 rpm. Enzymes were inactivated by drying the extruded products in the oven at 50°C for 48 hours followed by 80°C for 24 hours.

When the pilot scale extruder was used, the CSB+ powder was added into the extruder using a gravimetric twin screw feeder CT22 with a controller (Motan, Swizerland). Enzymes were mixed with demineralized water and introduced using a HPLC pump (Gilson, Japan) at a constant speed to obtain the desired enzyme dosage. The extrusion temperature was set to 70 °C except the final part where the temperature was set at 90 °C to inactivate the enzymes. The total extrusion time was 4 min with a rotation speed of 60 rpm.

### Example 4: Preparation and viscosity determination of CSB(+) porridge from extruded products

In this example, porridge was prepared from the extruded product to determine the effect of enzyme treatment in the extruder on the final product (without residual enzyme activity).

The extruded CSB(+) products were first dried in the oven and milled to a fine powder. The milled powder was then mixed with demineralized water at room temperature to obtain a 35% dry matter suspension. A suitable portion of the suspension was introduced to Rapid Visco Analyzer (Perten Instruments, Germany).

The suspension was heated in the RVA with a temperature and stirring profile intended to mimic a normal cooking process, as indicated in the following table:

**The program for one incubation (20 minutes cooking profile) and viscosity measurement in RVA.**

| Time [h:m:s] | Parameter | Value |
|---|---|---|
| 00:00:00 | Temp | 20 °C |
| 00:00:00 | Speed | 100 rpm |
| 00:02:00 | Temp | 20 °C |
| 00:22:00 | Temp | 96 °C |
| 00:27:00 | Temp | 96 °C |
| 00:37:00 | Temp | 45 °C |
| 01:07:00 | Temp | 45 °C |
| 01:07:10 | End | |

### Example 5: Does-response relationship of α-amylase in the extruder

In this example, the effect of enzyme on high CSB+ content with the assist of extruder was explored. The extruded product was prepared into a CSB porridge, and the viscosity was determined, following the protocol described in Example 4.

**Final viscosity of 35% CSB+ porridge made from lab scale extruded 75% CSB+ +/- EBA**

| CSB+ 75% Lab scale extruder | | |
|---|---|---|
| | Enzyme mg/g | viscosity at consumption cP |
| Blank (without extrusion) | 0 | 40000 |
| Blank (with extrusion) | 0 | 15000 |
| EBA | 1 | 600 |
| | 5 | 25 |

**Final viscosity of 35% CSB+ porridge made from pilot scale extruded 75% CSB+ +/- EBA**

| CSB+ 80% Pilot scale extruder | | |
|---|---|---|
| | Enzyme mg/g | viscosity at consumption cP |
| Blank (without extrusion) | 0 | 40000 |
| Blank (with extrusion) | 0 | 40000 |
| EBA | 1 | 4000 |
| | 5 | 2500 |
| | 10 | 1500 |

It is clear that EBA can also effectively reduce the final viscosity of CSB+ porridge in a dose-dependent manner at a very high solid content system with the assistance of an extruder. The effect of lower viscosity is carried over into the dried and milled final product.

### Example 6: Synergy between α-amylase and amyloglucosidase in an extuder

In this example, the synergy between α-amylase and amyloglucosidase in processing high-solid CSB+ paste in an extruder was explored.

| Lab scale extruder CSB+ 75% | | |
|---|---|---|
| | Enzyme mg/g | Glucose % w/w |
| EBA+AMG800 | 10+5 | 15.9 |
| EBA+AMG800 | 10+10 | 23.8 |

| Pilot scale extruder CSB+ 75% | | |
|---|---|---|
| | Enzyme mg/g | Glucose % w/w |
| AMG800 | 10 | 16.3 |
| EBA+AMG800 | 2.5+10 | 17.6 |
| EBA+AMG800 | 10+10 | 19 |

It is clear that inclusion of the α-amylase EBA stimulated glucose production by amyloglucosidase AMG800 at high solid content system.

### Example 7: Processing CSB (with ungelatinized starch) in an extruder

In this example, CSB was used, to check the robustness of the enzyme application in the extruder on a matrix comprising ungelatinized starch. The extrusion conditions were: 75% CSB, 70 °C, 100 rpm, 20 min. The extruded product was prepared into a CSB porridge following the protocol described in Example 4.

| Lab scale extruder CSB 75% | | |
|---|---|---|
| | Enzyme mg/g | viscosity at consumption cP |
| Blank (without extrusion) | 0 | 30000 |
| EBA | 5 | 500 |

It was clear that EBA can also effectively reduce the final viscosity of CSB paste comprising ungelatinized starch at a very high solid content system with the assistance of an extruder.

## Claims

1. Process for the preparation of a dry instant porridge containing hydrolysed starch for human consumption comprising the steps of:
a) feeding an extruder operated at a temperature comprised between 60 and 80°C with
(i) a milled carbohydrate-rich food blend comprising at least 50 wt. % carbohydrate,
(ii) at least one amylase, and
(iii) an aqueous solution,
wherein the resulting paste comprises less than 30 weight-% moisture, and
wherein the at least one amylase comprises an alpha-amylase and a glucoamylase
b) adjusting the residence time in the extruder to less than 30 minutes, and
c) drying the extruded product

2. Process according to claim 1, wherein the extruder is a twin screw extruder.

3. Process according to any of the claims 1 or 2, wherein the extruder is operated at a temperature comprised between 65 and 75°C.

4. Process according to any of the claims 1 to 3, wherein the milled carbohydrate-rich food blend comprises a cereal, a pseudo-cereal or a mixture thereof, and a protein rich legume flour.

5. Process according to claim 4, wherein the weight ratio of alpha-amylase/ glucoamylase is comprised between 0.1 and 10.

6. Process according to any of the claims 1 to 5 wherein the dry weight ratio of milled carbohydrate-rich food blend / amylase is comprised between 0.05 and 0.00005.

7. Process according to any of the claims 1 to 6 wherein the at least one amylase is added to the extruder via the aqueous solution.

8. Process according to any of the claims 1 to 7 wherein the at least one amylase is added to the extruder as a powder via the milled carbohydrate-rich food blend.

9. Process according to any of the claims 1 to 8 wherein the last segment of the extruder is heated up to 95°C to inactivate the at least one amylase.

10. Process according to any of the claims 1 to 9 wherein the dried extruded product of step c) is milled to a powder.

11. Process according to claim 10 wherein the milled powder is supplemented with a vitamin and mineral premix to generate a fortified dried instant porridge.

## Patentansprüche

1. Verfahren zum Herstellen eines trockenen Instantbreis, der hydrolysierte Stärke enthält, für den menschlichen Verzehr, umfassend die Schritte:
a) Zuführen zu einem bei einer Temperatur in dem Bereich zwischen 60 und 80 °C betriebenen Extruder:
(i) ein gemahlenes kohlenhydratreiches Lebensmittelgemisch, das wenigstens 50 Gew.-% Kohlenhydrat umfasst,
(ii) wenigstens eine Amylase und
(iii) eine wässrige Lösung,
wobei die erhaltene Paste weniger als 30 Gew.-% Feuchte umfasst und
wobei die wenigstens eine Amylase eine alpha-Amylase und eine Glucoamylase umfasst,
b) Einstellen der Verweildauer in dem Extruder auf weniger als 30 Minuten und
c) Trocken des extrudierten Produkts.

2. Verfahren gemäß Anspruch 1, wobei der Extruder ein Doppelschneckenextruder ist.

3. Verfahren gemäß einem der Ansprüche 1 oder 2, wobei der Extruder bei einer Temperatur in dem Bereich zwischen 65 und 75 °C betrieben wird.

4. Verfahren gemäß einem der Ansprüche 1 bis 3, wobei das gemahlene kohlenhydratreiche Lebensmittelgemisch ein Getreide, ein Pseudogetreide oder ein Gemisch davon und ein proteinreiches Hülsenfruchtmehl umfasst.

5. Verfahren gemäß Anspruch 4, wobei das Gewichtsverhältnis von alpha-Amylase/Glucoamylase in dem Bereich zwischen 0,1 und 10 liegt.

6. Verfahren gemäß einem der Ansprüche 1 bis 5, wobei das Trockengewichtsverhältnis von gemahleneskohlenhydratreiches-Lebensmittelgemisch / Amylase in dem Bereich zwischen 0,05 und 0,00005 liegt.

7. Verfahren gemäß einem der Ansprüche 1 bis 6, wobei die wenigstens eine Amylase dem Extruder über die wässrige Lösung zugeführt wird.

8. Verfahren gemäß einem der Ansprüche 1 bis 7, wobei die wenigstens eine Amylase dem Extruder als Pulver über das gemahlene kohlenhydratreiche Lebensmittelgemisch zugeführt wird.

9. Verfahren gemäß einem der Ansprüche 1 bis 8, wobei das letzte Segment des Extruders auf 95 °C erhitzt wird, um die wenigstens eine Amylase zu inaktivieren.

10. Verfahren gemäß einem der Ansprüche 1 bis 9, wobei das getrocknete extrudierte Produkt von Schritt c) zu einem Pulver gemahlen wird.

11. Verfahren gemäß Anspruch 10, wobei das gemahlene Pulver mit einer Vitamin- und Mineralstoffvormischung ergänzt wird, um einen verstärkten getrockneten Instantbrei zu erhalten.

## Revendications

1. Procédé de préparation d'une bouillie instantanée déshydratée contenant de l'amidon hydrolysé pour la consommation humaine, comprenant les étapes de :
a) introduction, dans une extrudeuse exploitée à une température comprise entre 60 et 80°C
(i) d'un mélange d'aliments broyés, riches en hydrates de carbone, comprenant au moins 50 % en poids d'hydrates de carbone,
(ii) d'au moins une amylase, et
(iii) d'une solution aqueuse,
la pâte obtenue comprenant moins de 30 % en poids d'humidité, et la ou les amylases comprenant une alpha-amylase et une glucoamylase,
b) ajustement du temps de séjour dans l'extrudeuse à moins de 30 minutes, et
c) déshydratation du produit extrudé.

2. Procédé selon la revendication 1, dans lequel l'extrudeuse est une extrudeuse à double vis.

3. Procédé selon l'une quelconque des revendications 1 ou 2, dans lequel l'extrudeuse est exploitée à une température comprise entre 65 et 75°C.

4. Procédé selon l'une quelconque des revendications 1 à 3, dans lequel le mélange d'aliments broyés riches en hydrates de carbone comprend une céréale, une pseudo-céréale, ou un mélange de celles-ci, et une farine de légumineuses riches en protéines.

5. Procédé selon la revendication 4, dans lequel le rapport en poids alpha-amylase/glucoamylase est compris entre 0,1 et 10.

6. Procédé selon l'une quelconque des revendications 1 à 5, dans lequel le rapport, en poids sec, mélange d'aliments broyés riches en hydrates de carbone/amylase est compris entre 0,05 et 0,00005.

7. Procédé selon l'une quelconque des revendications 1 à 6, dans lequel la ou les amylases sont introduites dans l'extrudeuse en solution aqueuse.

8. Procédé selon l'une quelconque des revendications 1 à 7, dans lequel la ou les amylases sont introduites dans l'extrudeuse sous forme d'une poudre, par l'intermédiaire du mélange d'aliments broyés riches en hydrates de carbone.

9. Procédé selon l'une quelconque des revendications 1 à 8, dans lequel le dernier segment de l'extrudeuse est chauffé jusqu'à 95°C pour inactiver la ou les amylases.

10. Procédé selon l'une quelconque des revendications 1 à 9, dans lequel le produit extrudé déshydraté de l'étape c) est broyé pour donner une poudre.

11. Procédé selon la revendication 10, dans lequel la poudre broyée est supplémentée par une vitamine et un prémix de minéraux, pour générer une bouillie instantanée déshydratée enrichie.
